# EUROPÄISCHE PATENTSCHRIFT

(11) **EP 0 579 922 B1**
(45) Veröffentlichungstag und Bekanntmachung des Hinweises auf die Patenterteilung: **11.03.1998**
(21) Anmeldenummer: 93108149.1
(22) Anmeldetag: 19.05.1993
(51) Int. Cl.: H04L 12/40, H04L 25/49

(54) **Datenübertragungsanordnung für ein lokales Datennetzwerk**
Data transmission device for a local area network
Dispositif de transmission de données pour un réseau local

(30) Priorität: 14.07.1992 CH 2217/92
(43) Veröffentlichungstag der Anmeldung: 26.01.1994
(73) Patentinhaber: Landis & Gyr Technology Innovation AG, 6301 Zug (CH)
(72) Erfinder: van Binsbergen, Hans, W-8934 Knonau (CH)
(74) Vertreter: Müller, Hans-Jürgen, Dipl.-Ing.

(56) Entgegenhaltungen:
- EP-A- 0 316 536
- FR-A- 2 567 702
- IEEE TRANSACTIONS ON COMMUNICATIONS Bd. 33, Nr. 5, Mai 1985, NEW YORK US Seiten 470 - 478 H. T. MOUFTAH ET AL. 'Design and Performance Study of a Microprocessor-Based Two-Wire full Duplex Baseband Modem'

## Beschreibung

Die Erfindung bezieht sich auf eine Datenübertragungsanordnung für ein lokales Datennetzwerk der im Oberbegriff des Anspruchs 1 genannten Art.

Solche Datenübertragungsanordnungen werden vorteilhaft in einem lokalen Datennetzwerk verwendet, welches mit einem asynchronen Datenübertragungsprotokoll arbeitet, das aus einzelnen UART-Zeichen (bitserieller Character) aufgebaut ist.

Es ist allgemein bekannt, zur Übertragung von binären Signalen die AMI-Codierung (alternate mark inversion) anzuwenden.

Es ist eine AMI-Codiereinrichtung bekannt (DE 37 35 395 C2), bei der eine arithmetische Einheit zur Codierung verwendet wird.

Im weiteren ist eine serielle Sende- und Empfangseinheit bekannt (GB 22 38 931 A), welche zur Koppelung eines Netzwerk-Knotens an ein Übertragungskabel eines Datennetzwerkes einen Transformator mit einem Mittelabgriff verwendet. Dies zeigt auch eine Terminal-Einheit (EP-A-0 316 536), welche zur Kopplung einer Sende- und Empfangseinheit an ein Übertragungskabel einen Transformator mit einem Mittelabgriff verwendet. Darüber hinaus weist diese Terminal-Einheit eine Empfangs- und eine Transmissionseinheit auf, die die empfangenen bzw. zu sendenden Signale umwandeln und vom bzw. in das Datennetzwerk lesen bzw. schreiben.

Aus der FR-A-2 567 702 ist für die Ansteuerung des für die Koppelung zuständigen Transformators eine Konstantstromquelle mit zwei symmetrischen Stromspiegeln bekannt.

Der Erfindung liegt die Aufgabe zugrunde, für ein lokales Datennetzwerk mit einer veränderbaren baumförmigen Topologie eine zuverlässige Datenübertragungsanordnung zu schaffen, welche den Bau einer kostengünstigen Netz-Treiber-Einheit für einen Netzwerk-Knoten ermöglicht.

Die Erfindung besteht in den im Anspruch 1 angegebenen Merkmalen. Vorteilhafte Ausgestaltungen ergeben sich aus den abhängigen Ansprüchen.

Es zeigen:
- Fig. 1: Teile eines Netzwerk-Knotens mit einer Netz-Treiber-Einheit für ein Übertragungsmedium,
- Fig. 2: ein Datennetzwerk mit mehreren Netzwerk-Knoten und einem Netzwerk-Abschluß,
- Fig. 3: ein Schaltbild der Netz-Treiber-Einheit,
- Fig. 4: die Sprungantwort eines Signals in einem Kabelstrang des Datennetzwerkes,
- Fig. 5: den prinzipiellen Verlauf von Signalen der Netz-Treiber-Einheit nach der Fig. 3 bei der Decodierung und
- Fig. 6: den Verlauf der Signale bei der Codierung.

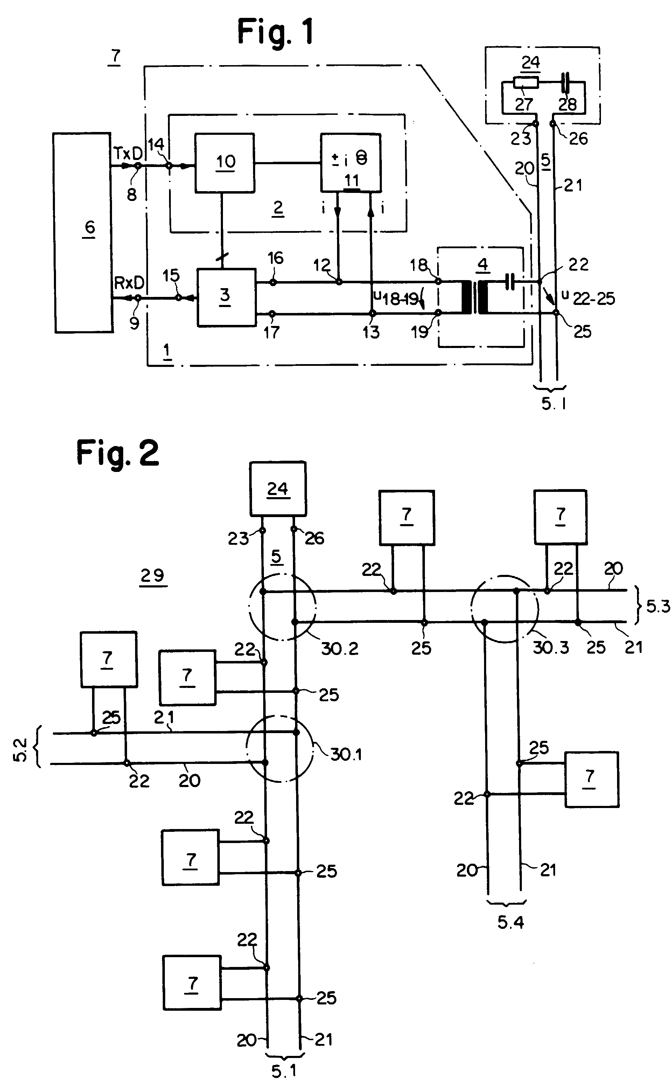

In der Fig. 1 bedeutet 1 eine Netz-Treiber-Einheit, in welcher ein Codegenerator 2, eine Decodiereinheit 3 und ein Koppelungsglied 4 für ein Übertragungsmedium 5 angeordnet sind. Die Netz-Treiber-Einheit 1 und eine serielle Sende/Empfangs-Einheit 6 sind Teile eines Netzwerk-Knotens 7.

Die Sende/Empfangs-Einheit 6 weist einen Ausgang 8 für bitserielle Daten TxD und einen Eingang 9 für bitserielle Daten RxD auf und ist mit Vorteil eine serielle Kommunikationseinheit (serial communication interface SCI) eines Mikrocomputers oder ein UART (universal asynchronous receiver/transmitter).

Der Codegenerator 2 weist eine Codiereinheit 10 und eine mit der Codiereinheit 10 verbundene Konstantstromstufe 11 mit einem ersten Ausgangspol 12 für einen Strom i und einem zweiten Ausgangspol 13 für den Strom i auf. Ein Eingang 14 der Codiereinheit 10 ist mit dem Ausgang 8 der Sende/Empfangs-Einheit 6 verbunden.

Die Decodiereinheit 3 verfügt über einen mit dem Eingang 9 der Sende/Empfangs-Einheit verbundenen Ausgang 15 sowie über zwei Eingangspole 16 bzw. 17, von denen ein erster Eingangspol 16 mit dem ersten Ausgangspol 12 der Konstantstromstufe 11 und einem ersten Eingangspol 18 des Koppelungsgliedes 4 verbunden ist, während der zweite Eingangspol 17 an den zweiten Ausgangspol 13 der Konstantstromstufe 11 sowie an einen zweiten Eingangspol 19 des Koppelungsgliedes 4 angeschlossen ist.

Das Übertragungsmedium 5 besteht aus mindestens einem Kabelstrang 5.1, welcher mindestens zwei Adern aufweist, von denen eine erste Ader 20 mit einem ersten Anschlusspol 22 des Koppelungsgliedes 4 und auch einem ersten Anschluss 23 eines Netz-Abschlusses 24 und eine zweite Ader 21 mit einem zweiten Anschlusspol 25 des Koppelungsgliedes 4 sowie einem zweiten Anschluss 26 des Netz-Abschlusses 24 verbunden ist.

Der Netz-Abschluss 24 ist vorteilhaft eine aus einem ohmschen Widerstand 27 und einem Kondensator 28 bestehende Reihenschaltung. Der Kondensator 28 trennt den Widerstand 27 gleichstrommässig vom Übertragungsmedium 5.

In der Fig. 2 sind sieben Netzwerk-Knoten 7 eines lokalen Datennetzwerkes 29 an dem aus einer Anzahl s Kabelsträngen bestehenden Übertragungsmedium 5 angeschlossen, welches an einem ersten Kabelstrang 5.1 den Netz-Abschluss 24 aufweist.

Der Netz-Abschluss 24 ist prinzipiell an einer beliebigen Stelle des Übertragungsmediums 5 plazierbar.

Die Anzahl s ist grundsätzlich nicht begrenzt und beträgt im dargestellten Datennetzwerk 29 vier. An Strangverzweigungen 30 (in der Fig. 2 mit 30.1 bis 30.4 bezeichnet) sind jeweils zwei Kabelstränge derart miteinander verbunden, dass die Topologie des Datennetzwerkes 29 prinzipiell baumförmig ist, wobei der Baum grundsätzlich beliebig verzweigt und dadurch entartet sein darf.

Je eine Ader 20 bzw. 21 des ersten Kabelstranges 5.1 ist an einer ersten Strangverzweigung 30.1 mit je einer Ader 20 bzw. 21 eines zweiten Kabelstranges 5.2 und an einer zweiten Strangverzweigung 30.2 mit je einer Ader 20 bzw. 21 eines dritten Kabelstranges 5.3 verbunden. Im weiteren ist je eine Ader 20 bzw. 21 des dritten Kabelstranges 5.3 an einer dritten Strangverzweigung 30.3 mit je einer Ader 20 bzw. 21 eines vierten Kabelstranges 5.4 verbunden.

Im Datennetzwerk 29 ist das Maximum k der Anzahl angeschlossener Netzwerk-Knoten 7 grundsätzlich nicht beschränkt. Zugunsten einer annehmbaren maximalen Antwortzeit für ein Token Passing Verfahren und auch um einen kleinen Adressbereich zu erlangen, wird das Maximum k mit Vorteil auf 127 beschränkt. Die Summe der Längen aller Kabelstränge 5.1, 5.2, 5.3, 5.4 ist zugunsten eines weiteren Vorteils, nämlich keine Leitungsverstärker (repeater) zu verwenden, auf etwa 1000 m beschränkt. Bei Bedarf werden Datennetzwerke 29 für grössere Ausdehnungen in bekannter Art über Leitungsverstärker gekoppelt.

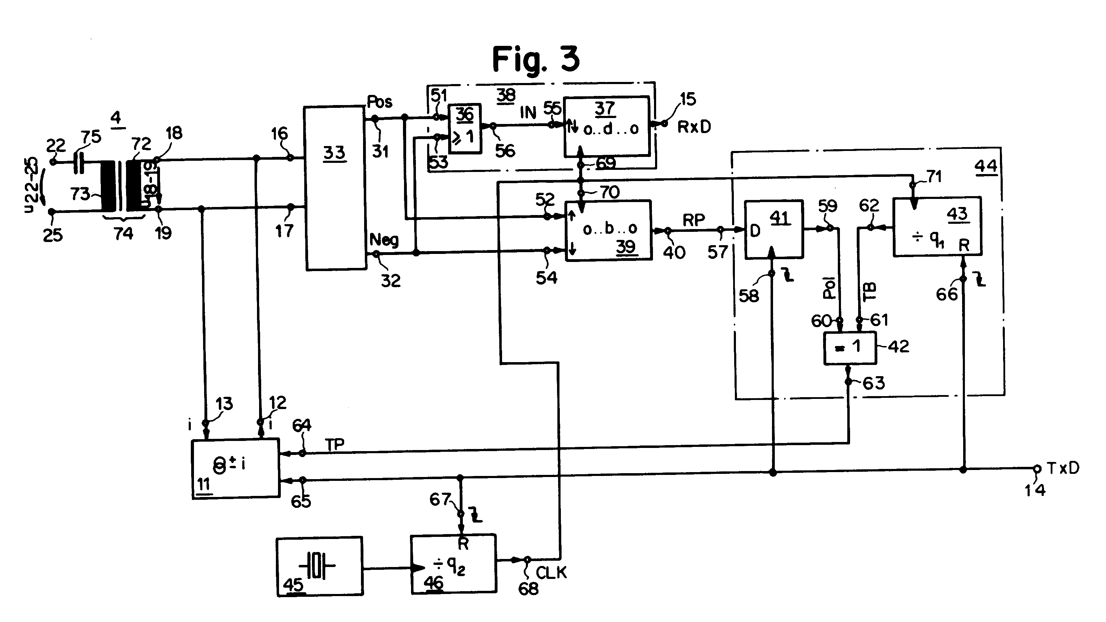

Eine in der Fig. 3 dargestellte vorteilhafte Ausführung der Netz-Treiber-Einheit 1 mit dem Koppelungsglied 4 und der bipolaren Konstantstromstufe 11 weist eine über zwei Signaleingänge sowie einen ersten Ausgang (31) für ein Signal Pos und einen zweiten Ausgang (32) für ein Signal Neg verfügende Komparatorschaltung (33), ein aus einem ODER-Gatter 36 und einem dualen Auf/Abwärts-Zähler 37 aufgebautes Signal-Filter 38, einen Polaritäts-Detektor 39 mit einem Ausgang 40 für ein Signal RP, einen aus einer Kippschaltung 41, einem Exclusiv-ODER-Gatter 42 und einem ersten Frequenzteiler 43 aufgebauten Generatorteil 44 und einen Quarzoszillator 45 mit einem dem Quarzoszillator 45 nachgeschalteten zweiten Frequenzteiler 46 (prescaler) auf.

Der erste Eingangspol 16 ist ein erster Signaleingang der Komparatorschaltung 33, während der zweite Eingangspol 17 durch den zweiten Signaleingang der Komparatorschaltung 33 verwirklicht ist.

Die Komparatorschaltung 33 ist mit ihrem ersten Ausgang 31 mit einem ersten Eingang 51 des ODER-Gatters 36 und einem ersten Steuereingang 52 des Polaritäts-Detektors 39 verbunden, während der zweite Ausgang 32 an einen zweiten Eingang 53 des ODER-Gatters 36 und an einen zweiten Steuereingang 54 des Polaritäts-Detektors 39 angeschlossen ist.

Ein Steuereingang 55 für ein Steuersignal IN des Auf/Abwärts-Zählers 37 ist mit einem Ausgang 56 des ODER-Gatters 36 verbunden. Der Ausgang 15 der Decodiereinheit 3 (Fig. 1) ist ein Ausgang des Auf/Abwärts-Zählers 37 und zugleich auch ein Ausgang des Signalfilters 38. Der Ausgang 40 des Polaritäts-Detektors 39 ist mit einem Dateneingang 57 der Kippschaltung 41 verbunden, welche mit Vorteil ein an einem Takteingang 58 mit einer negativen bzw. abfallenden Flanke triggerbares D-Flip-Flop (Data Latch) mit einem Datenausgang 59 ist, wobei der Dateneingang 57 der D-Eingang des D-Flip-Flops ist. Der Datenausgang 59 für ein Signal Pol der Kippschaltung 41 ist mit einem ersten Eingang 60 des Exklusiv-ODER-Gatters 42 verbunden, von dem ein zweiter Eingang 61 mit einem Ausgang 62 für ein Signal TB des ersten Frequenzteilers 43 verbunden ist.

Die bipolare Konstantstromstufe 11 weist einen ersten mit einem Ausgang 63 des Exklusiv-ODER-Gatters 42 verbundenen Steuereingang 64 für ein Steuersignal TP und einen zweiten mit dem Eingang 14 der Netz-Treiber-Einheit 1 verbundenen Steuereingang 65 für die bitseriellen Daten TxD auf. Im weiteren führt der Eingang 14 auf den Takteingang 58 der Kippschaltung 41 sowie auf einen Rücksetzeingang 66 des ersten Frequenzteilers 43 und auf einen Rücksetzeingang 67 des zweiten Frequenzteilers 46.

Ein für ein vorteilhaft binäres Taktsignal CLK bestimmter Ausgang 68 des zweiten Frequenzteilers 46 führt auf einen Takteingang 69 des Auf/Abwärtszählers 37, auf einen Takteingang 70 des Polaritäts-Detektors 39 und auf einen Takteingang 71 des ersten Frequenzteilers 43.

Das Koppelungsglied 4 weist mit Vorteil einen mit einer ersten Wicklung 72 und einer zweiten Wicklung 73 versehenen Transformator 74 und einen Kondensator 75 auf, wobei die beiden Eingangspole 18 und 19 die Anschlüsse der ersten Wicklung 72 sind und zwischen den beiden Anschlusspolen 22 und 25 eine aus dem Kondensator 75 und der zweiten Wicklung 73 bestehende Reihenschaltung liegt.

Der Kondensator 75 entkoppelt den Transformator 74 gleichstrommässig vom Übertragungsmedium 5.

Die Komparatorschaltung 33 ist vorteilhaft derart ausgelegt, dass Gleichtaktstörungen (common mode noise), welche im wesentlichen infolge der Kapazität des Transformators 74 auftreten, wirksam unterdrückt werden.

Bei Bedarf ist zwischen den beiden Anschlusspolen 22 und 25, parallel zu der aus dem Kondensator 75 und der zweiten Wicklung 73 bestehenden Reihenschaltung ein Spannungsbegrenzungsglied geschaltet.

Ein asynchrones Datenübertragungsprotokoll einer höheren Schicht (upper layer) des Datenübertragungsnetzwerkes 29 ist aus Protokollzeichen - beispielsweise aus ASCII-Zeichen (american standard code for information interchange) - aufgebaut, welche im Netzwerk-Knoten 7 zwischen der Sende/Empfangs-Einheit (6) und der Netz-Treiber-Einheit (1) in Form der bitseriellen Daten TxD bzw. RxD ausgetauscht werden.

Die Protokollzeichen der bitseriellen Daten TxD bzw. RxD haben eine konstante Länge, das heisst, eine Anzahl n der Bits pro Protokollzeichen des Datenübertragungsprotokolls ist konstant.

Im weiteren weist jedes Protokollzeichen der bitseriellen Daten TxD bzw. RxD eine Anzahl n₁ Startbits, eine Anzahl n₂ eigentlicher Informationsbits, eine Anzahl n₃ Prüfbits und eine Anzahl n₄ Stoppbits auf.

Die Anzahl n₁ sowie die Anzahl n₂, die Anzahl n₃ und die Anzahl n₄ entspricht mit Vorteil einer bekannten Norm, welche auch eine Reihenfolge der einzelnen Bits der Protokollzeichen festlegt.

Jedes Protokollzeichen der bitseriellen Daten TxD bzw. RxD weist mit Vorteil eine gerade Anzahl Bits mit dem Wert "0" oder dann eine gerade Anzahl Bits mit dem Wert "1" auf, so dass mit einem geringen schaltungstechnischen Aufwand aus einem Protokollzeichen ein Signal generierbar ist, welches über die Dauer des Protokollzeichens gemittelt den Wert null aufweist.

Die n Bits des Protokollzeichens werden im Netzwerk-Knoten 7 zwischen der Netz-Treiber-Einheit (1) und der Sende/Empfangs-Einheit 6 und auch zwischen den Netzwerk-Knoten 7 des Datennetzwerkes 29 mit einer stabilen Bitrate f_{Bit}, also innerhalb des Protokollzeichens bitsynchron übertragen.

Der in der Fig. 1 gezeigte Codegenerator 2 transformiert jedes Protokollzeichen der bitseriellen Daten TxD in einen ternären Code, welcher vorteilhaft als ein in Abschnitten im wesentlichen konstanter Strom i in den beiden Ausgangspolen 12 und 13 dargestellt ist. Der über die Dauer eines Protokollzeichens gemittelte Wert des Stromes i beträgt mit Vorteil null.

Der ternäre Code ist vorteilhaft ein bekannter AMI-Code (Alternate Mark Inversion), wobei ein erster Wert des Codes mit Vorteil als positiver Rechteckimpuls des Stromes i mit einer Impulszeit T_{Bit}, ein zweiter Wert als negativer Rechteckimpuls des Stromes i mit der Impulszeit T_{Bit} und der dritte Wert mit i=0 dargestellt ist. Der Betrag des Stromes i ist während der Impulszeit T_{Bit} mit Vorteil im wesentlichen konstant. Die Impulszeit T_{Bit} ergibt sich aus der Bitrate f_{Bit} mit der Formel T_{Bit} = 1/f_{Bit} .

Derjenige binäre Wert, welcher im Protokollzeichen stets in gerader Anzahl vorliegt, wird im AMI-Code mit Vorteil als Impuls übermittelt, wobei die Polarität eines nachfolgenden Impulses immer umgekehrt gegenüber seinem vorangehenden Impuls ist.

Der Strom i fliesst im wesentlichen durch die Eingangspole 18 und 19 des Koppelungsgliedes 4, welches die Impulse des Stromes i in entsprechende Impulse einer zwischen den beiden Anschlusspolen 22 und 25 liegenden Spannung u₂₂₋₂₅ tansformiert.

Die Konstantstromstufe 11 bringt gegenüber einer Spannungsstufe die Vorteile, dass Resonanzerscheinungen eines im wesentlichen aus der transformierten Kapazität des Übertragungsmediums 5 und der Streuinduktivität des Transformators 74 gebildeten Schwingkreises wirksam verhindert werden und dass sich die Spannung u₂₂₋₂₅ am Übertragungsmedium 5 mit zunehmender Entfernung vom Netz-Abschluss 24 infolge des Leitungswiderstandes des Übertragungsmediums 5 erhöht.

Eine zwischen den beiden Eingangspolen 18 und 19 wirkende Eingangsimpedanz des Koppelungsgliedes 4 ist mit Vorteil mindestens etwa 1000-mal kleiner als die zwischen den Eingangspolen 16 und 17 wirkende Eingangsimpedanz der Decodiereinheit 3.

Die Decodiereinheit 3 wandelt eine dem AMI-codierten Protokollzeichen entsprechende, zwischen den beiden Eingangspolen 16 und 17 liegende Spannung u₁₈₋₁₉ in die bitseriellen Daten RxD des Protokollzeichens um.

Mit Vorteil arbeitet die Decodiereinheit 3 gleichzeitig mit dem Codegenerator 2 und übermittelt dabei der Codiereinheit 10 die Polarität eines vorher registrierten Impulses der Spannung u₁₈₋₁₉.

Eine zwischen den beiden Adern 20 und 21 des Übertragungsmediums 5 liegende Wechselspannung wird im Netzwerk-Knoten 7 durch das Koppelungsglied 4 an dessen beide Eingangspole 18 und 19 damit an die Eingangspole 16 und 17 der Decodiereinheit 3 übertragen.

Das Koppelungsglied 4 erfüllt im wesentlichen vier Aufgaben, nämlich die Übertragung des vom Codegenerator 2 in Form eines Stromes i generierten Codes vom Netzwerk-Knoten 7 auf das Übertragungsmedium 5, die Übertragung eines in Form einer Spannung u₂₂₋₂₅ vorliegenden Codes vom Übertragungsmedium 5 zur Decodiereinheit 3 des Netzwerk-Knotens, eine Gleichstrom-Entkoppelung des Netzwerk-Knotens 7 vom Übertragungsmedium und eine galvanische Trennung des Netzwerk-Knotens 7 vom Übertragungsmedium 5 und damit eine galvanische Trennung aller Netzwerk-Knoten 7 des Datennetzwerkes 29.

Die wesentlichen Parameter des Koppelungsgliedes 4, des Übertragungsmediums 5 und des Netzabschlusses 24 sind bei der gewünschten Bitrate f_{Bit} in bekannter Art aufeinander abgestimmt. Dadurch, dass der Codegenerator 2 den Code in Form des in Abschnitten im wesentlichen konstanten Stromes i generiert, werden die Resonanzerscheinungen unterdrückt, die Netztopologie (Fig. 2) des Datennetzwerkes 29 und die Anzahl der Netzwerk-Knoten 7 im Datennetzwerk 29 sind in den beschriebenen Grenzen veränderbar und die Spannung u₂₂₋₂₅ am Übertragungsmedium 5 auf einen rechteckförmigen Impuls des Stromes i weist stets eine vorteilhafte Sprungantwort auf.

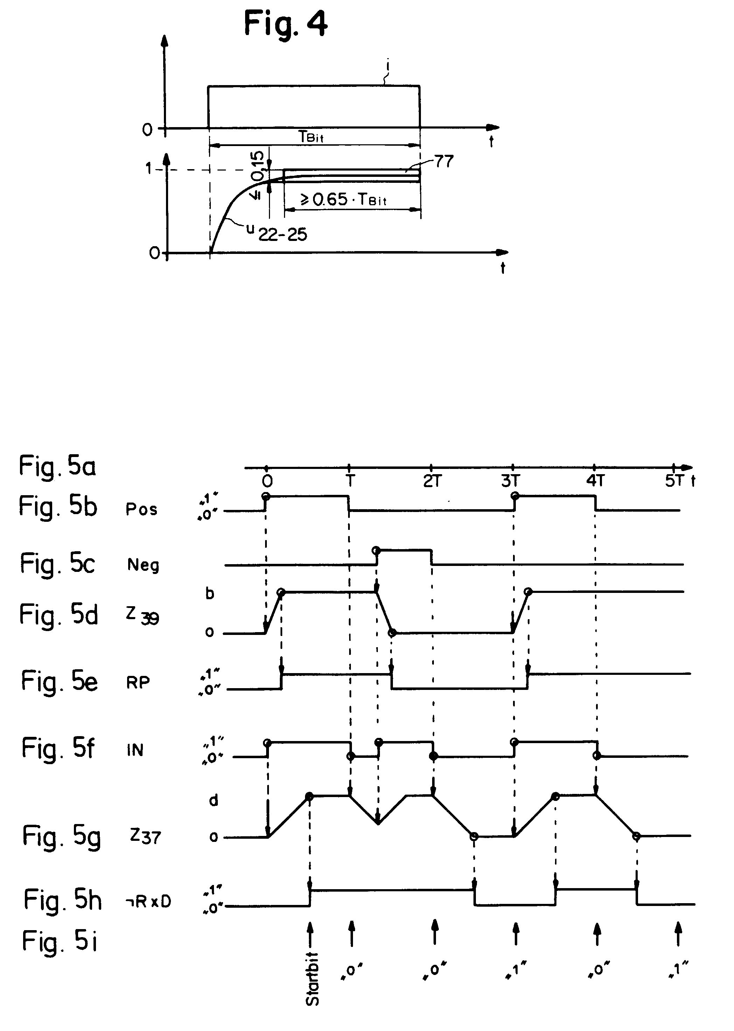

Die Fig. 4 zeigt einen positiven Impuls der Länge T_{Bit} des Stromes i und die vorteilhafte Sprungantwort der Spannung u₂₂₋₂₅ auf die positive Flanke des Impulses. Um eine Zeit von höchstens 0.35·T_{Bit} verzögert auf die positive Flanke verläuft die Spannung u₂₂₋₂₅ innerhalb eines rechteckigen Fensters 77. Die Spannung u₂₂₋₂₅ weicht im Fenster 77 höchstens 15% von ihrem Nennwert bei logisch "1" ab. Das Fenster 77 grenzt den zugesicherten Verlauf der vorteilhaften Sprungantwort ein.

Im folgenden wird die Funktionsweise der in der Fig. 3 dargestellten vorteilhaften Ausführung der Netz-Treiber-Einheit 1 beschrieben.

Die Protokollzeichen der bitseriellen Daten TxD bzw. RxD sind für diese Ausführung gemäss einem in der Norm DIN 19 245 (Process Field Bus, PROFIBus) verwendeten UART-Character vorausgesetzt, welcher in der aufgezählten Reihenfolge ein Startbit mit dem Wert "0", acht Informationsbits, ein Prüfbit und ein Stoppbit mit dem Wert "1" aufweist. Das Prüfbit ist ein Paritätsbit, welches durch seinen Wert eine Summe der Bits, deren Wert "1" beträgt, auf einen geraden Wert festlegt, wobei zur Bildung der Summe die Informationsbits und das Prüfbit des Protokollzeichens berücksichtigt sind.

Die Netz-Treiber-Einheit 1 ist nach einfachen Überlegungen für andere Protokollzeichen anpassbar.

In der Netz-Treiber-Einheit 1 wird ein AMI-Code codiert bzw. decodiert, bei dem der Wert "0" des Protokollzeichens als Impuls dargestellt ist. Das Protokollzeichen weist eine gerade Anzahl Bits mit dem Wert "0" auf und die bitseriellen Daten TxD bzw. RxD weisen zwischen zwei Protokollzeichen (also im sogenannten Idle-Zustand) den Wert "1" auf.

Ein prinzipieller Verlauf von Signalen in der Fig. 5 erklärt beispielhaft wesentliche Schritte bei der Decodierung des AMI-Codes der Spannung u₁₈₋₁₉.

Ein für alle Signale in der Fig. 5 geltender Zeitmaßstab ist in der Fig. 5a dargestellt. Die Zeiteinheit T entspricht der Impulszeit T_{Bit} und hat beispielsweise bei einer Bitrate f_{Bit} von 19200 s⁻¹ eine Dauer von 52µs.

Die Frequenz f_{CLK} des Taktsignals CLK ist ein Vielfaches der Bitrate f_{Bit}. Bei einer Bitrate f_{Bit}=19200 s⁻¹ weist das Taktsignal CLK mit Vorteil die Frequenz f_{CLK} von 614,4 kHz auf.

Das binäre Signal Pos (Fig. 5b) am ersten Ausgang 31 der Komparatorschaltung 33 ist nur im Falle eines positiven Impulses der Spannung u₁₈₋₁₉ auf "1", während das binäre Signal Neg (Fig. 5c) am zweiten Ausgang 32 der Komparatorschaltung 33 bei einem negativen Impuls der Spannung u₁₈₋₁₉ auf logisch "1" ist.

Das binäre Signal RP (Fig. 5e) am Ausgang 40 des Polaritäts-Detektors 39 stellt die aktuelle Polarität der Impulse der Spannung u₁₈₋₁₉ weitgehend störungsfrei dar; mit logisch "1" ein positiver Impuls, mit logisch "0" ein negativer Impuls. Mit Vorteil ist der Polaritäts-Detektor 39 ein Auf/Abwärts-Zähler mit einem Zählerstand Z₃₉ (Fig. 5d), welcher mittels Impulsen des Taktsignals CLK zwischen null und einem oberen Wert b veränderbar ist. Wenn das Signal Pos logisch "1" und der Zählerstand Z₃₉ kleiner als der Wert b ist, erhöht ein Impuls des Taktsignals CLK den Zählerstand Z₃₉ um eins, wenn das Signal Neg logisch "1" ist und der Zählerstand Z₃₉ grösser als null ist, erniedrigt ein Impuls des Taktsignals CLK den Zählerstand Z₃₉ um eins. Erreicht der Zählerstand Z₃₉ den Wert b, wird das Signal RP logisch "1" und behält den Wert so lange, bis der Zählerstand Z₃₉ null erreicht, worauf das Signal RP auf logisch "0" wechselt .

Der Wert b bestimmt die Störsicherheit des Polaritäts-Detektors 39. In einer Gleichung b/f_{CLK} = α·T_{Bit} ist der Faktor α vorteilhaft etwa 0,2 bis 0,3. Ist die Impulszeit T_{Bit}=52µs und die Frequenz f_{CLK}=614,4 kHz dann ist b=7 ein vorteilhafter Wert.

Das Signal IN (Fig. 5f) bildet sich aus den beiden Signalen Pos und Neg, hat den Verlauf (Pos ODER Neg) und steuert die Zählrichtung des Auf/Abwärts-Zählers 37, dessen Zählerstand Z₃₇ (Fig. 5g) mittels Impulsen des Taktsignals CLK zwischen null und einem oberen Wert d veränderbar ist. Wenn das Signal IN logisch "1" und der Zählerstand Z₃₇ kleiner als der Wert d ist, erhöht ein Impuls des Taktsignals CLK den Zählerstand Z₃₇ um eins, wenn das Signal IN logisch "0" ist und der Zählerstand Z₃₇ grösser als null ist, erniedrigt ein Impuls des Taktsignals CLK den Zählerstand Z₃₇ um eins. Erreicht der Zählerstand Z₃₇ den Wert d, wird das zu den bitseriellen Daten RxD inverse Signal ¬RxD (Fig. 5h) logisch "1" und behält den Wert solange bis der Zählerstand Z₃₉ null erreicht, worauf das Signal ¬RxD auf logisch "0" wechselt.

Da beim Decodieren des AMI-Codes das Signal IN gebildet und verwendet wird, welches prinzipiell "Impuls des AMI-Codes" und "kein Impuls des AMI-Codes" darstellt, sind die positiven und die negativen Impulse der Spannung u₁₈₋₁₉ beim Decodieren grundsätzlich gleichgestellt, wodurch die beiden Anschlusspole 22 und 25 der Netz-Treiber-Einheit 1 ohne Funktionsverlust vertauschbar sind, was beim Anschliessen des Netzwerk-Knotens 7 vorteilhaft ist.

Der Wert d bestimmt die Wirkung des Signalfilters 38. In einer Gleichung d/f_{CLK} = β·T_{Bit} ist der Faktor β vorteilhaft etwa 0,2 bis 0,3, vorausgesetzt, dass die Komparatorschaltung 33 eine kleine Schalthysterese (typischerweise etwa 5% der Schwellspannung) aufweist. Beträgt die Impulszeit T_{Bit}=52µs und die Frequenz f_{CLK}=614,4 kHz, dann ist d=7 ein vorteilhafter Wert.

In der Fig. 5i bezeichnen ein erster Pfeil das Startbit der bitseriellen Daten RxD und weitere Pfeile die Zeitpunkte, bei denen die Daten RxD in der Sende/Empfangs-Einheit 6 abgetastet werden. Bei den Pfeilen ist der aktuelle Informationswert der bitseriellen Daten RxD angegeben.

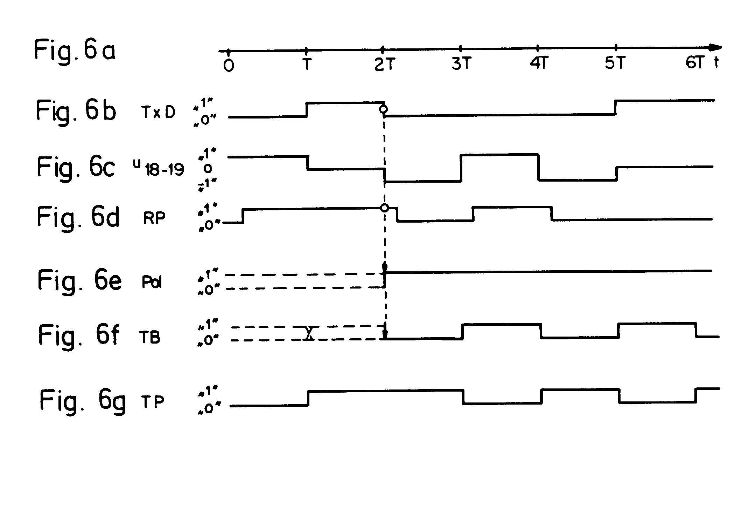

Ein prinzipieller Verlauf von Signalen in der Fig. 6 erklärt beispielhaft wesentliche Schritte bei der Codierung des AMI-Codes des Stromes i bzw. der Spannung u₁₈₋₁₉ (Fig. 6c) aus den bitseriellen Daten TxD (Fig. 6b).

Ein für alle Signale in der Fig. 6 geltender Zeitmaßstab ist in der Fig. 6a dargestellt. Die Zeiteinheit T entspricht der Impulszeit T_{Bit} und hat beispielsweise bei einer Bitrate f_{Bit} von 19200 s⁻¹ eine Dauer von 52µs.

Das binäre Signal RP (Fig. 6d bzw. Fig. 5e) stellt die Polarität des zuletzt ermittelten Impulses der Spannung u₁₈₋₁₉ dar, welche beim AMI-Code die Polarität des nachfolgenden Impulses bestimmt.

Dadurch, dass die Codierung von der Polarität des zuletzt ermittelten Impulses der Spannung u₁₈₋₁₉ abhängig ist, ist gewährleistet, dass aufeinanderfolgende Impulse der Spannung u₁₈₋₁₉ stets unterschiedliche Polarität aufweisen, so dass der Transformator 74 auch symmetrisch angesteuert wird, wenn die Netz-Treiber-Einheit 1 zwischen Empfangen und Senden abwechselt.

Durch die Kippschaltung 41 weist das binäre Signal Pol (Fig. 6e) nach einer negativen Flanke des Signals TxD den Momentanwert des Signals RP zum Zeitpunkt der negativen Flanke auf.

Der erste Frequenzteiler 43 mit einer Teilung q₁ bildet aus dem Taktsignal CLK das Signal TB (Fig. 6f), dessen Frequenz f_{TB} mit der Formel f_{TB} - f_{CLK} / q₁ gegeben ist. Durch eine negative Flanke am Rücksetzeingang 66 wird die Teilung neu gestartet. Die Impulszeit des Signals TB ist vorteilhaft gleich gross wie dessen Pausenzeit. Die Frequenz f_{TB} ist nach der Beziehung f_{TB}=f_{Bit}/2 durch die Bitrate f_{Bit} bestimmt.

Ist die Bitrate beispielsweise f_{Bit}=19200 s⁻¹ und die Frequenz f_{TB}=614,4 kHz, dann ist die Teilung q₁=64.

Das Steuersignal TP (Fig. 6g) ist aus den beiden Signalen Pol und TB gebildet und hat den Verlauf (Pol XOR TB), wobei XOR die boolesche Antivalenz bedeutet.

Die Polarität des Stromes i wird in der Konstantstromstufe 11 durch das Steuersignal TP bestimmt, womit sichergestellt ist, dass die Polarität von sich folgenden Impulsen des Stromes i immer wechselt.

Durch das Steuersignal TP ist zudem sichergestellt, dass die Polarität eines Impulses des Stromes i umgekehrt zur Polarität eines diesem Strom-Impuls zuletzt vorangegangenen Impulses der Spannung u₁₈₋₁₉ ist. Die Konstantstromstufe 11 wählt aufgrund des Steuersignals TP die Polarität des Stromes (i) derart, dass aufeinanderfolgende Impulse der zwischen den beiden Eingangspolen (18; 19) liegende Spannung (u₁₈₋₁₉) eine unterschiedliche Polarität aufweisen.

Über den zweiten binären Steuereingang 65 wird der Strom i in der Konstantstromstufe 11 ein- oder ausgeschaltet, wobei der Strom bei TxD="0" einschaltet und bei TxD="1" ausgeschaltet wird.

Die Konstantstromstufe 11 besteht beispielsweise im wesentlichen aus einer abschaltbaren Konstantstromquelle und aus vier zu einer H-Brücke geschalteten steuerbaren Schaltern.

Der zweite Frequenzteiler 46 mit einer Teilung q₂ bildet aus dem Ausgangssignal des Quarzoszillators 45 das Taktsignal CLK. Durch eine negative Flanke am Rücksetzeingang 67 wird die Teilung neu gestartet.

Die Kabelstränge des Übertragungsmediums sind mit Vorteil konventionelle Twisted Pair Kabel.

Die Steilheit der Sprungantwort der Spannung u₂₂₋₂₅ (Fig. 4) und damit die Grenzen des Fensters 77 sind durch die bei kurzgeschlossener zweiter Wicklung 73 ermittelbaren Streuinduktivität L_{S} des Transformators 74 (Fig. 3), durch den ohmschen Widerstand 27 (Fig. 1) des Netz-Abschlusses 24 und durch eine von der Konstantstromstufe 11 (Fig. 3) zur Erzeugung eines Impulses des Stromes i verfügbaren Versorgungsspannung beeinflussbar. Insbesonders die Konstantstromstufe 11 ermöglicht auf eine einfache Weise den vorteilhaften Anstieg der Sprungantwort.

Bei der Versorgungsspannung von 10 V ergibt sich die vorteilhafte Sprungantwort, wenn der Widerstand 27 einen Nennwert von 100 Ohm und die Streuinduktivität Lₛ zwischen 0,75 mH und 2,25 mH ist.

Die beiden Wicklungen 72 und 73 weisen vorteilhaft dieselbe Induktivität L auf, welche vorteilhaft grösser als 1,5 H ist.

Durch den Netz-Abschluss 24 ist das Übertragungsmedium 5 allzeit vorteilhaft abgeschlossen, so dass der Transformator 74 insbesonders beim Übergang von einem Senden zu einer Sendepause durch seine Induktivität keine Störimpulse auf dem Üertragungsmedium 5 verursacht.

Weil der Transformator 74 durch den Kondensator 75 und der Widerstand 27 des Netz-Abschlusses 24 durch den Kondensator 28 gleichstrommässig vom Übertragungsmedium 5 getrennt sind, können die beiden Adern 20 und 21 zusätzlich der Übertragung einer Gleichspannung dienen, mit welcher die Netzwerk-Knoten 7 mit wenig Aufwand über das Übertragungsmedium 5 speisbar sind.

Durch die Datenübertragungsanordnung mit dem zweiadrigen, an einer beliebiger Stelle mit dem Netz-Abschluss 24 abgeschlossenen Übertragungsmedium 5, mit der Netz-Treiber-Einheit 1, welche die Decodiereinheit 3, den Codegenerator 2 mit der Konstantstromstufe 11 und das Koppelungsglied 4 mit dem Transformator 74 aufweist, kann die Topologie des Datennetzwerkes 29 mit einfachen Mitteln in weiten Grenzen mit kleinem Störungsrisiko verändert werden. Die Netz-Treiber-Einheit 1 ist zuverlässig und kostengünstig herstellbar.

## Patentansprüche

1. Datenübertragungsanordnung für ein lokales Datennetzwerk (29) (Local Area Network LAN), welches mit einem asynchronen, aus bitseriell dargestellten Protokollzeichen konstanter Länge aufgebauten Datenübertragungsprotokoll arbeitet, dem mindestens zwei je eine Netz-Treiber-Einheit (1) aufweisende Netzwerk-Knoten (7) mit mindestens je zwei Anschlußpolen (22; 25) für ein gemeinsames Übertragungsmedium (5) angehören, wobei das Übertragungsmedium (5) mindestens ein Kabelstrang (5.1) ist, welcher mindestens zwei Adern (20; 21) aufweist und wobei die Netz-Treiber-Einheit (1) eine Codiereinheit (10), eine Decodiereinheit (3) mit einem Ausgang (15) für die Protokollzeichen und ein Koppelungsglied (4) mit zwei Anschlußpolen (22; 25) für das Übertragungsmedium (5) aufweist,
**dadurch gekennzeichnet,**
[a] daß die Codiereinheit (10) einen Eingang (14) für die Protokollzeichen aufweist,
[b] daß die Netz-Treiber-Einheit (1) eine der Codiereinheit (10) nachgeschaltete bipolare Konstantstromstufe (11) aufweist,
[c] daß das Koppelungsglied (4) zwei Eingangspole (18; 19) aufweist, wobei
[c.1] der erste Eingangspol (18) des Koppelungsgliedes (4) mit einem ersten Ausgangspol (12) der Konstantstromstufe (11) und einem ersten Eingangspol (16) der Decodiereinheit (3) verbunden ist, und
[c.2] der zweite Eingangspol (19) des Koppelungsgliedes (4) mit einem zweiten Ausgangspol (13) der Konstantstromstufe (11) und einem zweiten Eingangspol (17) der Decodiereinheit (3) verbunden ist, und
[d] daß das Übertragungsmedium (5) an einer Stelle abgeschlossen ist, indem die beiden Adern (20; 21) an der Stelle durch einen Netz-Abschluß (24) verbunden sind.

2. Datenübertragungsanordnung nach Anspruch 1, dadurch gekennzeichnet,
[a] dass durch die Codiereinheit (10) für jedes an seinem Eingang (14) eingegebene Protokollzeichen ein ternärer Code erzeugbar ist, dessen drei Werte durch die bipolare Konstantstromstufe (11) jeweils in Abschnitten betragsmässig im wesentlichen konstant als ein positiver Impuls eines Stromes (i) oder als ein negativer Impuls des Stromes (i) oder als eine stromlose Pause in den Eingangspolen (18; 19) des Koppelungsgliedes (4) einprägbar sind, wobei der Mittelwert des Stromes (i) innerhalb eines Protokollzeichens null ist und wobei die Polarität eines der Impulse des Stromes (i) derart gewählt ist, dass aufeinanderfolgende Impulse einer zwischen den beiden Eingangspolen (18; 19) liegende Spannung (u₁₈₋₁₉) eine unterschiedliche Polarität aufweisen,
[b] dass die Codiereinheit (10) mit der Decodiereinheit (3) derart verbunden ist, dass die Richtung des Stromes (i) der Codiereinheit (3) übermittelbar ist, und
[c] dass in der Decodiereinheit (3) die positiven Impulse und die negativen Impulse gleichgestellt sind, so dass die beiden Anschlusspole (22; 25) des Koppelungsgliedes (4) vertauschbar sind.

3. Datenübertragungsanordnung nach einem der Ansprüche 1 oder 2, dadurch gekennzeichnet, dass das Koppelungsglied (4) einen Transformator (74) mit mindestens zwei Wicklungen (72; 73) und einen Kondensator (75) aufweist, wobei die beiden Eingangspole (18; 19) die Anschlüsse einer ersten Wicklung (72) sind und zwischen den beiden Anschlusspolen (22; 25) eine aus dem Kondensator (75) und einer zweiten Wicklung (73) bestehende Reihenschaltung liegt.

4. Datenübertragungsanordnung nach einem der Ansprüche 1 bis 3, dadurch gekennzeichnet, dass der Netz-Abschluss (24) eine Reihenschaltung aus einem ohmschen Widerstand (27) und einem Kondensator (28) ist.

5. Datenübertragungsanordnung nach einem der Ansprüche 1 bis 4, dadurch gekennzeichnet, dass durch die Codiereinheit (10) aus den Protokollzeichen ein AMI-Code (alternate mark inversion) erzeugbar ist.

6. Datenübertragungsanordnung nach einem der Ansprüche 1 bis 5,
**dadurch gekennzeichnet,**
[a] daß die Decodiereinheit (3)
[a.1] eine über zwei Signaleingänge sowie einen ersten Ausgang (31) und einen zweiten Ausgang (32) verfügende Komparatorschaltung (33) und
[a.2] ein aus einem ODER-Gatter (36) und einem dualen Auf/Abwärts-Zähler (37) bestehendes Signal-Filter (38) aufweist, wobei
[a.3] ein erster Eingangspol (16) der erste Signaleingang der komparatorschaltung (33) und der zweite Eingangspol (17) der zweite Signaleingang der Komparatorschaltung (33) ist,
[b] daß die Codiereinheit (10)
[b.1] einen Polaritäts-Detektor (39) mit einem Ausgang (40) für ein Signal (RP),
[b.2] einen aus einer Kippschaltung (41), einem Exklusiv-ODER-Gatter (42) und einem ersten Frequenzteiler (43) bestehenden Generatorteil (44) und
[b.3] einen zweiten Frequenzteiler (46) aufweist, wobei
[b.4] die Komparatorschaltung (33) mit ihrem ersten Ausgang (31) mit einem ersten Eingang (51) des ODER-Gatters (36) und einem ersten Steuereingang (52) des Polaritäts-Detektors (39) verbunden ist und wobei
[b.5] der zweite Ausgang (32) an einen zweiten Eingang (53) des ODER-Gatters (36) und an einen zweiten Steuereingang (54) des Polaritäts-Detektors (39) angeschlossen ist,
[c] daß ein Steuereingang (55) für ein Steuersignal (IN) des Auf/Abwärts-Zählers (37) mit einem Ausgang (56) des ODER-Gatters (36) verbunden ist,
[d] daß der Ausgang (15) der Decodiereinheit (3) ein Ausgang des Auf/Abwärts-Zählers (37) und zugleich auch ein Ausgang des Signalfilters (38) ist,
[e] daß der Ausgang (40) des Polaritäts-Detektors (39) mit einem Dateneingang (57) der über einen Takteingang (58) und einen Datenausgang (59) für ein Signal (Pol) verfügenden Kippschaltung (41) verbunden ist,
[f] daß der Datenausgang (59) der Kippschaltung (41) mit einem ersten Eingang (60) des Exklusiv-ODER-Gatters (42) verbunden ist, von dem ein zweiter Eingang (61) mit einem Ausgang (62) für ein Signal (TB) des ersten Frequenzteilers (43) verbunden ist,
[g] daß die bipolare Konstantstromstufe (11) einen ersten mit dem Ausgang (63) des Exklusiv-ODER-Gatters (42) verbundenen Steuereingang (64) für ein Steuersignal (TP) und einen zweiten mit dem Eingang (14) der Netz-Treiber-Einheit (1) verbundenen Steuereingang (65) aufweist,
[h] daß der Eingang (14) der Codiereinheit (10) zusätzlich mit dem Takteingang (58) der Kippschaltung (41) sowie mit einen Rücksetzeingang (66) des ersten Frequenzteilers (43) und mit einem Rücksetzeingang (67) des zweiten Frequenzteilers (46) verbunden ist und
[i] daß der Ausgang (68) des zweiten Frequenzteilers (46) mit einem Takteingang (69) des Auf/Abwärtszählers (37), mit einem Takteingang (70) des Polaritäts-Detektors (39) und mit einem Takteingang (71) des ersten Frequenzteilers (43) verbunden ist.

7. Datenübertragungsanordnung nach einem der Ansprüche 1 bis 6, dadurch gekennzeichnet, dass der Polaritäts-Detektor (39) ein Auf/Abwärts-Zähler ist.

## Claims

1. A data transmission arrangement for a local data network (29) (local area network LAN) which operates with an asynchronous data transmission protocol which is made up from constant-length protocol characters represented in bit-serial mode and to which there belong at least two network nodes (7) each having a respective network driver unit (1) and with at least two respective connecting poles (22; 25) for a common transmission medium (5), wherein the transmission medium (5) is at least one cable strand (5.1) which has at least two wires (20;21) and wherein the network driver unit (1) has an encoding unit (10), a decoding unit (3) with an output (15) for the protocol characters and a coupling member (4) with two connecting poles (22; 25) for the transmission medium (5),
characterised in that
[a] the encoding unit (10) has an input (14) for the protocol characters,
[b] the network driver unit (1) has a bipolar constant current stage (11) connected downstream of the encoding unit (10),
[c] the coupling member (4) has two input poles (18; 19) wherein
[c.1] the first input pole (18) of the coupling member (4) is connected to a first output pole (12) of the constant current stage (11) and a first input pole (16) of the decoding unit (3), and
[c.2] the second input pole (19) of the coupling member (4) is connected to a second output pole (13) of the constant current stage (11) and a second input pole (17) of the decoding unit (3), and
[d] the transmission medium (5) is terminated at a location by the two wires (20; 21) being connected at the location by a network termination (24).

2. A data transmission arrangement according to claim 1 characterised in that
[a] a ternary code can be produced by the encoding unit (10) for each protocol character which is inputted at its input (14), the three values of which ternary code can be impressed into the input poles (18; 19) of the coupling member (4) by the bipolar constant stage (11) in respective portions substantially constantly in terms of magnitude as a positive pulse of a current (i) or as a negative pulse of the current (i) or as a current-less space, wherein the mean value of the current (i) is zero within a protocol character and wherein the polarity of one of the pulses of the current (i) is so selected that successive pulses of a voltage (u₁₈₋₁₉) between the two input poles (18; 19) are of different polarities,
[b] the encoding unit (10) is connected to the decoding unit (3) in such a way that the direction of the current (i) can be communicated to the encoding unit (3), and
[c] in the decoding unit (3) the positive pulses and the negative pulses are equated so that the two connecting poles (22; 25) of the coupling member (4) are interchangeable.

3. A data transmission arrangement according to one of claims 1 and 2 characterised in that the coupling member (4) has a transformer (74) with at least windings (72; 73) and a capacitor (75), wherein the two input poles (18; 19) are the connections of a first winding (72) and disposed between the two connecting poles (22; 25) is a series circuit comprising the capacitor (75) and a second winding (73).

4. A data transmission arrangement according to one of claims 1 to 3 characterised in that the network termination (24) is a series circuit comprising an ohmic resistor (27) and a capacitor (28).

5. A data transmission arrangement according to one of claims 1 to 4 characterised in that an AMI-code (alternate mark inversion) can be produced by the encoding unit (10) from the protocol characters.

6. A data transmission arrangement according to one of claims 1 to 5 characterised in that
[a] the decoding unit (3) has
[a.1] a comparator circuit (33) which has two signal inputs and a first output (31) and a second output (32), and
[a.2] a signal filter (38) comprising an OR-gate (36) and a dual up/down counter (37), wherein
[a.3] a first input pole (16) is the first signal input of the comparator circuit (33) and the second input pole (17) is the second signal input of the comparator circuit (33),
[b] the encoding unit (10)
[b.1] has a polarity detector (39) with an output (40) for a signal (RP),
[b.2] a generator portion (44) comprising a trigger circuit (41), an exclusive-OR-gate (42) and a first frequency divider (43), and
[b.3] a second frequency divider (46), wherein
[b.4] the comparator circuit (33) is connected with its first output (31) to a first input (51) of the OR-gate (36) and a first control input (52) of the polarity detector (39), and wherein
[b.5] the second output (32) is connected to a second input (53) of the OR-gate (36) and to a second control input (54) of the polarity detector (39),
[c] a control input (55) for a control signal (IN) of the up/down counter (37) is connected to an output (56) of the OR-gate (36), [d] the output (15) of the decoding unit (3) is an output of the up/down counter (37) and at the same time also an output of the signal filter (38),
[e] the output (40) of the polarity detector (39) is connected to a data input (57) of the trigger circuit (41) which has a clock input (58) and a data output (59) for a signal (Pol),
[f] the data output (59) of the trigger circuit (41) is connected to a first input (60) of the exclusive-OR-gate (42) of which a second input (61) is connected to an output (62) for a signal (TB) of the first frequency divider (43),
[g] the bipolar constant current stage (11) has a first control input (64) for a control signal (TP), which is connected to the output (63) of the exclusive-OR-gate (42), and a second control input (65) connected to the input (14) of the network driver unit (1),
[h] the input (14) of the encoding unit (10) is additionally connected to the clock input (58) of the trigger circuit (41) and to a reset input (66) of the first frequency divider (43) and to a reset input (67) of the second frequency divider (46), and
[i] the output (68) of the second frequency divider (46) is connected to a clock input (69) of the up/down counter (37), to a clock input (70) of the polarity detector (39) and to a clock input (71) of the first frequency divider (43).

7. A data transmission arrangement according to one of claims 1 to 6 characterised in that the polarity detector (39) is an up/down counter.

## Revendications

1. Dispositif de transmission de données pour un réseau local de transmission de données (29) (Local Area Network LAN), qui travaille avec un protocole asynchrone de transmission de données établi à partir de signes de protocole de longueur constante, représentés en série au niveau des bits, et dont font partie au moins deux noeuds (7) du réseau, qui possèdent chacun une unité formant étage de commande (1) du réseau comportant au moins deux pôles de connexion (22;25) pour un milieu commun de transmission (5), le milieu de transmission (5) étant au moins un faisceau de câbles (5.1), qui comporte au moins deux conducteurs (20;21), et dans lequel l'unité (1) formant étage de commande du réseau contient une unité de codage (10), une unité de décodage (3) pourvue d'une sortie (15) pour les signes de protocole et un circuit de couplage (4) comportant deux pôles de connexion (22;25) pour le milieu de transmission (5),
caractérisé en ce
[a] que l'unité de codage (10) comporte une entrée (14) pour les signes de protocole,
[b] que l'unité (1) formant étage de commande du réseau comporte un étage bipolaire à courant constant (11) branché en aval de l'unité de codage (10),
[c] que le circuit de couplage (4) comporte deux pôles d'entrée (18,19),
[c.1] le premier pôle d'entrée (18) du circuit de couplage (4) étant relié au premier pôle de sortie (12) de l'étage à courant constant (11) et à un premier pôle d'entrée (16) de l'unité de décodage (3), et
[c.2] le second pôle d'entrée (19) du circuit de couplage (4) étant relié à un second pôle de sortie (13) de l'étage à courant constant (11) et à un second pôle d'entrée (17) de l'unité de décodage (3), et
[d] que le milieu de transmission (5) est terminé en un emplacement, au niveau duquel les conducteurs (20;21) sont reliés en cet emplacement par une terminaison (24) du réseau.

2. Dispositif de transmission de données selon la revendication 1, caractérisé en ce que
[a] que l'unité de codage (10) peut produire, pour chaque signal de protocole introduit à son entrée (14), un code ternaire, dont les trois valeurs peuvent être injectées par l'étage à courant constant bipolaire (11), et ce avec une valeur sensiblement constante pendant des intervalles respectifs, sous la forme d'une impulsion positive d'un courant (i) ou sous la forme d'une impulsion négative du courant (i) ou sous la forme d'une pause sans courant, dans les pôles d'entrée (18,19) du circuit de couplage (4), la valeur moyenne du courant (i) à l'intérieur d'un signal de protocole étant nulle, et la polarité de l'une des impulsions du courant (i) étant choisie de telle sorte que des impulsions successives d'une tension (U₁₈₋₁₉), présente entre les deux pôles d'entrée (18;19), possèdent une polarité différente,
[b] que l'unité de codage (10) est reliée à l'unité de décodage (3) de telle sorte que le sens du courant (i) peut être transmis à l'unité de codage (3), et
[c] que dans l'unité de décodage (3), les impulsions positives et les impulsions négatives sont égalisées de sorte que les deux pôles de connexion (22;25) du circuit de couplage (4) peuvent être permutés.

3. Dispositif de transmission de données selon l'une des revendications 1 ou 2, caractérisé en ce que le circuit de couplage (4) possède un transformateur (74) comportant au moins deux enroulements (72;73) et un condensateur (75), les deux pôles d'entrée (18;19) étant les bornes d'un premier enroulement (72), tandis qu'un circuit série constitué par le condensateur (75) et un second enroulement (73) est situé entre les deux bornes de connexion (22;25).

4. Dispositif de transmission de données selon l'une des revendications 1 à 3, caractérisé en ce que la terminaison (24) du réseau est un circuit série formé d'une résistance ohmique (27) et d'un condensateur (28).

5. Dispositif de transmission de données selon l'une des revendications 1 à 4, caractérisé en ce qu'un code AMI (alternate mark inversion) peut être produit par l'unité de codage (10) à partir des signes de protocole.

6. Dispositif de transmission de données selon l'une des revendications 1 à 5, caractérisé en ce
[a] que l'unité de décodage (3) comporte
[a.1] un circuit comparateur (33) comportant deux entrées de signaux ainsi qu'une première sortie (31) et une seconde sortie (32), et
[a.2] un filtre (38) des signaux constitué par une porte OU (36) et un compteur linéaire progressif / régressif (37),
[a.3] un premier pôle d'entrée (16) constituant la première entrée de signaux du circuit comparateur (33) et le second pôle d'entrée (17) constituant la seconde entrée de signaux du circuit comparateur (33),
[b] que l'unité de codage (10) comprend
[b.1] un détecteur de polarité (39) comportant une sortie (40) pour un signal (RP),
[b.2] une partie formant générateur (44) constituée par un circuit à bascule (41), une porte OU-Exclusif (42) et un premier diviseur de fréquence (43), et
[b.3] un second diviseur de fréquence (46),
[b.4] le circuit comparateur (33) étant relié par sa première sortie (31) à une première entrée (51) de la porte OU (36) et une première entrée de commande (52) du détecteur de polarité (39), et
[b.5] la seconde sortie (32) étant raccordée à la seconde entrée (53) de la porte OU (36) et à une seconde entrée de commande (54) du détecteur de polarité (39),
[c] qu'une unité de commande (55) pour un signal de commande (IN) du compteur progressif / régressif (37) est reliée à une sortie (56) de la porte OU (36),
[d] que la sortie (15) de l'unité de décodage (3) est une sortie du compteur progressif / régressif (37) et également simultanément une sortie du filtre de signaux (38),
[e] que la sortie (40) du détecteur de polarité (39) est reliée à une entrée de données (57) du circuit à bascule (41) qui comporte une entrée de cadence (58) et une sortie de données (59) pour un signal (Pol),
[f] que la sortie de données (49) du circuit à bascule (41) est reliée à une première entrée (60) de la porte OU-Exclusif (42), dont une seconde entrée (61) est reliée à une sortie (62) pour un signal (TB) du premier diviseur de fréquence (43),
[g] que l'étage bipolaire à courant constant (11) comporte une première entrée de commande (64) reliée à la sortie (63) de la porte OU-Exclusif (42), pour un signal de commande (TP) et une seconde entrée de commande (65) reliée à l'entrée (14) de l'unité (1) formant étage de commande du réseau,
[h] que l'entrée (14) de l'unité de codage (10) est en outre reliée à l'entrée de cadence (58) du circuit à bascule (41) ainsi qu'une entrée de remise à l'état initial (66) du premier diviseur de fréquence (43) et une entrée de remise à l'état initial (67) du second diviseur de fréquence (46), et
[i] que la sortie (68) du second diviseur de fréquence (46) est reliée à une entrée de cadence (69) du compteur progressif / régressif (37), à une entrée de cadence (70) du détecteur de polarité (39) et une entrée de cadence (71) du premier diviseur de fréquence (43).

7. Dispositif de transmission de données selon l'une des revendications 1 à 6, caractérisé en ce que le détecteur de polarité (39) est un compteur progressif / régressif.
